# EUROPEAN PATENT SPECIFICATION

(11) **EP 3 324 144 B1**
(45) Date of publication and mention of the grant of the patent: **10.04.2019**
(21) Application number: 16199762.2
(22) Date of filing: 21.11.2016
(51) Int. Cl.: F41B 5/12, F41B 5/00

(54) **CONNECTION DEVICE FOR CONNECTING LIMB TO BARREL OF CROSSBOW**
VERBINDUNGSVORRICHTUNG ZUM VERBINDEN EINES GLIEDS AM LAUF EINER ARMBRUST
DISPOSITIF DE CONNEXION PERMETTANT DE CONNECTER UN MEMBRE AU FÛT D'UNE ARBALÈTE

(43) Date of publication of application: 23.05.2018
(73) Proprietor: Poe Lang Enterprise Co., Ltd., Taichung City 42081 (TW)
(72) Inventor: Liu, Chi-Chang, Taichung City 42081 (TW)
(74) Representative: Cabinet Chaillot

(56) References cited:
- CH-A- 384 409
- CH-A- 432 295
- CH-A5- 623 129
- FR-A1- 2 601 123
- US-A- 3 242 917

## Description

### BACKGROUND OF THE INVENTION

### 1. Fields of the invention

The present invention relates to a crossbow, and more particularly, to a connection structure for connecting the limb to the barrel.

### 2. Descriptions of Related Art

The conventional crossbow generally includes a limb and a barrel which is usually fixed to the limb by bolts. The conventional crossbows are bulky and not suitable for transportation.

One of the conventional crossbows known to applicant discloses a limb and a barrel which has a recess and the limb is engaged with the recess of the barrel by fixing members. However, when assembling or dis-assembling the crossbow, the users have to remove the fixing members from the recess of the barrel, and then unscrewing the other bolts from the holes of the barrel such that the slide is able to be slid away to open the recess. The limb is then able to be inserted into the recess or removed from the recess. It is easier to assemble or dis-assemble the limb to the barrel when compared with the other conventional crossbows. The applicant wants to develop a connection structure for connecting the limb to the barrel, and the connection structure is easily operated.

FR 2601123A1 discloses a crossbow according to the preamble of claim 1.

The present invention intends to provide a connection structure for connecting the limb to the barrel quickly so as to improve the shortcomings mentioned above.

### SUMMARY OF THE INVENTION

The present invention relates to a crossbow as defined in claim 1 and comprises a barrel, a fixing member and a limb. The barrel has a first end and a second end, and a recess is defined in the barrel and located between the first and second ends. A receiving recess is defined in one inner end of the recess and located close to the first end of the barrel.

A fixing member has a reception hole defined in one side thereof. A protrusion protrudes from the fixing member and is received in the receiving recess. A fastener extends through the protrusion and contacts the limb against the inside of the reception hole such that the limb is connected to the reception hole of the fixing member. The fixing member is connected to the recess of the barrel. A pin extends through the barrel and the protrusion of the fixing member so as to restrict the fixing member from disengaging from the recess of the barrel. The pin has a head and a shank, wherein the shank has a groove, a first notch and a second notch defined in the outside thereof. The first and second notches are located on two ends of the groove. A positioning unit positions the pin to the barrel. A string is connected between the two ends of the limb.

The primary object of the present invention is to provide a crossbow wherein the limb is quickly assembled to or dis-assembled from the barrel by the connection structure.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the crossbow of the present invention;
Fig. 2 shows that the fixing member and the limb are to be connected to the barrel;
Fig. 3 is a perspective view to show the crossbow of the present invention;
Fig. 4 is a perspective view to show the fixing member of the crossbow of the present invention;
Fig. 5 shows another perspective view to show the fixing member of the crossbow of the present invention;
Fig. 6 is a cross sectional view, taken along line VI-VI in Fig. 3;
Fig. 7 is a cross sectional view, taken along line VIII-VIII in Fig. 3;
Fig. 8 is a cross sectional view to show that the pin in Fig. 5 is engaged with the second notch, and
Fig. 9 shows that the fixing member is installed to another limb of different size.

### DETAILED DESCRIPTION OF THE PREFERRED EMBODIMENT

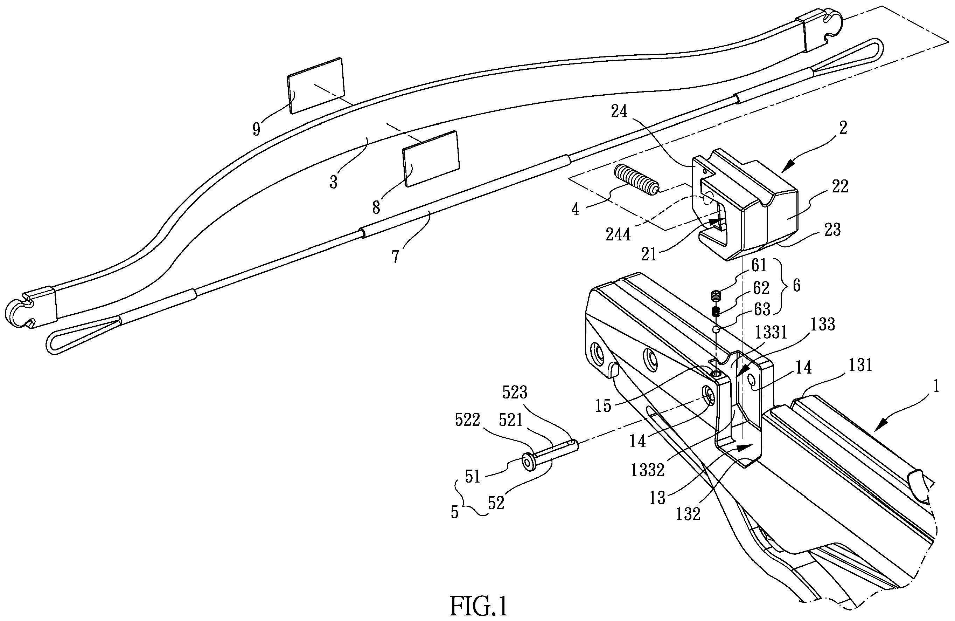

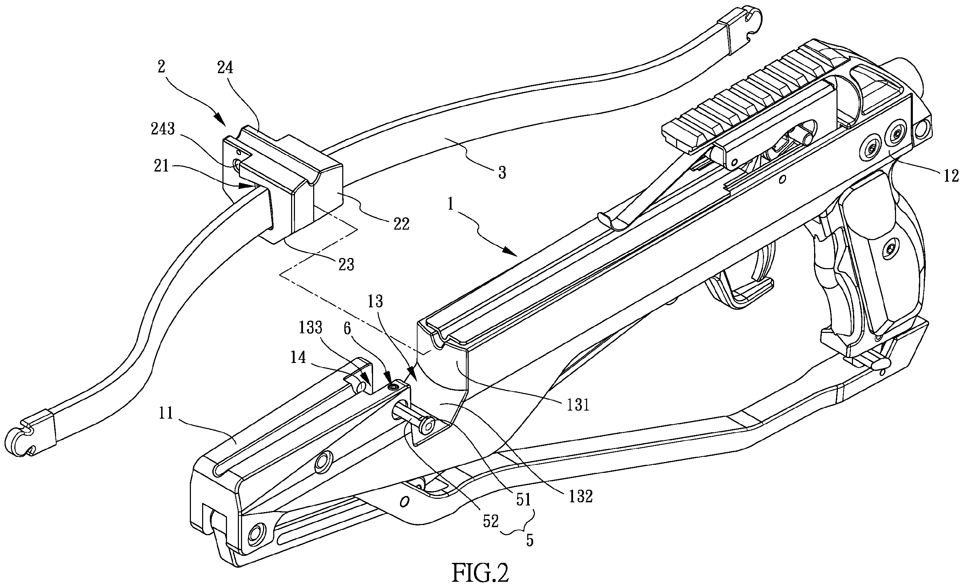

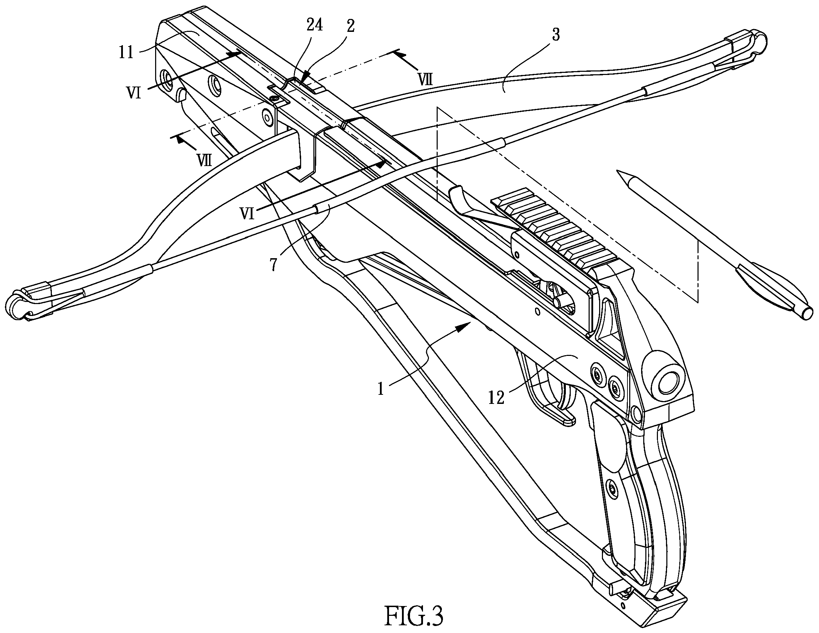

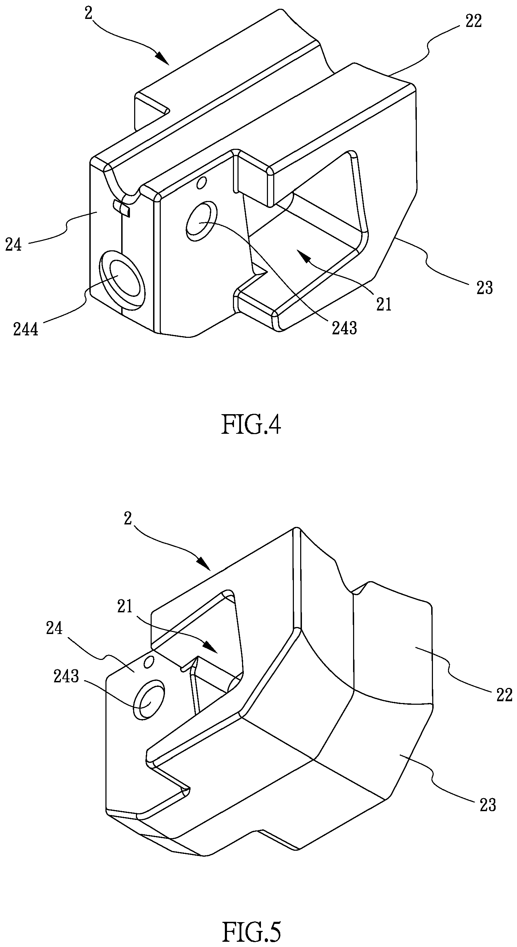

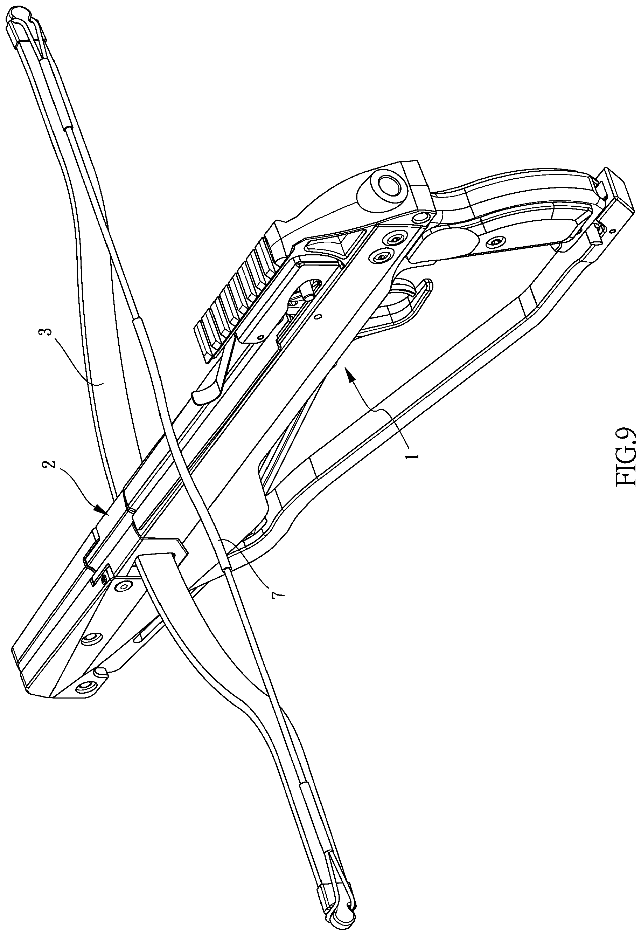

Referring to Figs. 1 to 9, the crossbow of the present invention comprises a barrel 1, a fixing member 2 and a limb 3.

The barrel 1 having a first end 11 and a second end 12. A recess 13 is defined in the barrel 1 and located between the first and second ends 11, 12. A receiving recess 133 is defined in one inner end of the recess 13 and located close to the first end 11 of the barrel 1.

The fixing member 2 has a reception hole 21 defined in one side thereof. A protrusion 24 protrudes from the fixing member 2 and is received in the receiving recess 133. A fastener 4 extends through the protrusion 24 and contacts the limb 3 against the inside of the reception hole 21 such that the limb 3 is connected to the reception hole 21 of the fixing member 2. When the fastener 4 is unscrewed, the limb 3 is released from the fastener 4 so that the limb 3 is easily removed. The fixing member 2 is connected to the recess 13 of the barrel 1. A pin 5 extends through the barrel 1 and the protrusion 24 of the fixing member 2 so as to restrict the fixing member 2 from disengaging from the recess 13 of the barrel 1. The pin 5 has a head 51 and a shank 52, wherein the shank 52 has a groove 521, a first notch 522 and a second notch 523 defined in the outside thereof. The first and second notches 522, 523 are located on two ends of the groove 521. A positioning unit 6 positions the pin 5 to the barrel 1. A string 7 is connected between the two ends of the limb 3.

When assembling, the fastener 4 secures the limb 3 to the reception hole 21 of the fixing member 2. The fixing member 2 is then connected to the recess 13 of the barrel 1. The pin 5 extends through the barrel 1 and the protrusion 24 of the fixing member 2. When dis-assembling, the user pushes the pin 5 to release fixing member 2 from the pin 5. The fixing member 2 is able to be removed from the recess 13 of the barrel 1. The steps for assembling and dis-assembling are simplified and easy. The disassembled crossbow occupies less space and easily to be transported. The limb 3 can be easily replaced by simply operating the fastener 4.

The receiving recess 133 is located between two sidewalls, and each sidewall has a first hole 14 defined therethrough. A positioning hole 15 is defined in one of the sidewalls and communicates with the first hole 14 of the sidewall in which the positioning hole 15 is defined. The protrusion 24 has a second hole 243 and a passage 244, wherein the second hole 243 is located corresponding to the first hole 14, and the passage 244 communicates with the reception hole 21. The fixing member 2 is engaged with the recess 13 of the barrel 1. The pin 5 extends through the first hole 14 and the second hole 243 to restrict the fixing member 2 from disengaging from the recess 13 of the barrel 1. The positioning unit 6 is connected to the positioning hole 15 to fix the pin 5.

The positioning unit 6 includes a bolt 61, a resilient member 62 and a ball 63. The ball 63, the resilient member 62 and the bolt 61 are received in the positioning hole 15 in sequence. The bolt 61 is connected to the positioning hole 15 to restrict the resilient member 62 and the ball 63 from disengaging from the positioning hole 15. The resilient member 62 is biased between the ball 63 and the bolt 61 so that the ball 63 is biased to be engaged with one of the first notch 522 or the second notch 523.

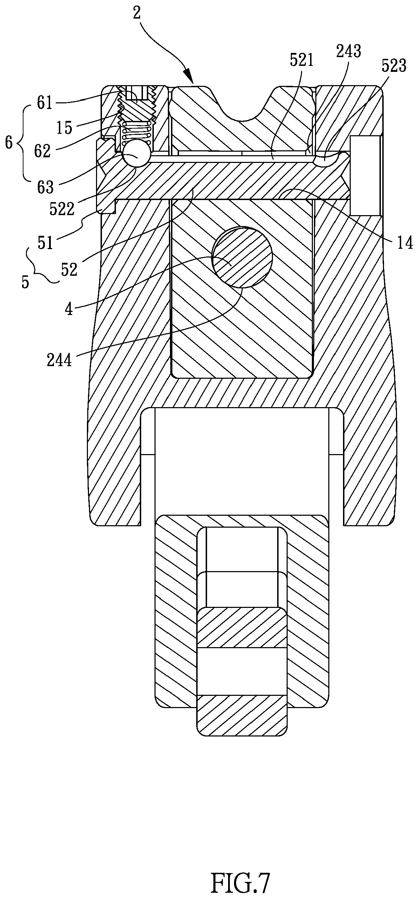

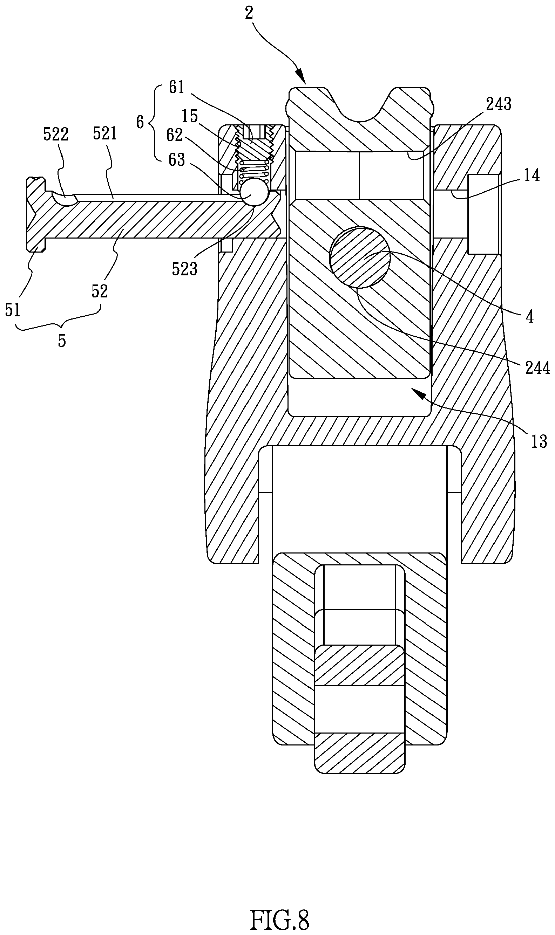

When the users want to remove the fixing member 2 from the recess 13 of the barrel 1, the user pushes the distal end of the shank 52 toward the head 51 to remove the ball 63 from the first notch 522 to the second notch 523. Therefore, the pin 5 does not drop from the barrel 1 due to the ball 63 engaged with the second notch 523. On the contrary, when the users want to install the fixing member 2 to the recess 13 of the barrel 1, the user pushes the head 51 to allow the pin 5 to pass through the first hole 14 and the second hole 243. The ball 63 is removed from the second notch 523 to the first notch 522. Therefore, the pin 5 does not drop from the barrel 1 due to the ball 63 engaged with the first notch 522. The pin 5 does not drop during operation to install the fixing member 2 or to remove the fixing member 2 as shown in Figs. 7 and 8.

The recess 13 has a curved face 131 and a first inclined face 132 defined in another inner end of the recess 13 and located close to the second end 12 of the barrel 1. The recess 13 has an engaging face 1331 and a inclined surface 1332 are defined in the inner end thereof which is located close to the first end of the barrel 1. The fixing member 2 has a curved face 22 and an inclined guiding face 23. The protrusion 24 has a contact face 241 and a second inclined face 242. The curved face 22 and an inclined guiding face 23 of the fixing member 2 are located corresponding to the curved face 131 and the first inclined face 132. The contact face 241 and the second inclined face 242 of the protrusion 24 are located corresponding to the engaging face 1331 and the inclined surface 1332 of the recess 13.

The curved face 22 of the fixing member 2 and the inclined guiding face 23 are located corresponding to the curved face 131 and the first inclined face 132 of the recess 13, so that when the user pulls the arrow (not shown), the force of the string 7 is distributed from the curved face 22 and the inclined guiding face 23 to the curved face 131 and the first inclined face 132, and the force continues to be distributed to the barrel 1. Therefore, the strength and stability of the crossbow are reinforced and enhanced. When the user pulls the trigger, the string 7 sends the arrow away. The bouncing force of the string is distributed from the contact face 241 and the second inclined face 242 to the engaging face 1331 and the inclined surface 1332, and the force continues to be distributed to the barrel 1. Therefore, the strength and stable feature of the crossbow are reinforced and enhanced when operating the crossbow.

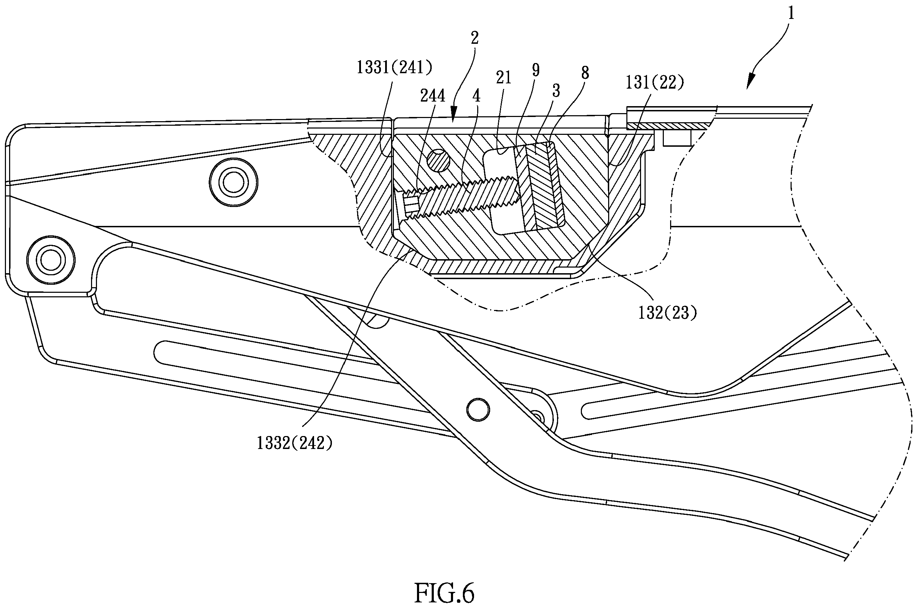

As shown in Figs. 1 and 6, a first plate 8 and a second plate 9 are located in the reception hole 21 and the limb 3 is clamped between the first and second plates 8, 9. The fastener 4 is connected to the passage 244 and contacts against the second plate 9 in the reception hole 21. The second plate 9 pushes against the limb 3 and the first plate 8 to the inside of the reception hole 21 to fix the limb 3 to the reception hole 21 of the fixing member 2. As shown in Fig. 6, the reception hole 21 and the passage 244 tilt from the second inclined face 242 toward the curved face 22.

As shown in Figs. 1, 4 and 5, the curved face 131 extends downward from an opening of the recess 13 and is connected to the first inclined face 132 which extends to an inner end of the recess 13. The engaging face 1331 extends downward from the opening of the recess 13 and is connected to the inclined surface 1332 which extends to the inner end of the recess 13. The curved face 22 extends downward from the top edge of the fixing member 2 and is connected to the inclined guiding face 23 and extends to the underside of the fixing member 2. The contact face 241 extends downward from the top edge of the of the fixing member 2 and is connected to the second inclined face 242 and extends to the underside of the fixing member 2.

While we have shown and described the embodiment in accordance with the present invention, it should be clear to those skilled in the art that further embodiments may be made without departing from the scope of the present invention as claimed in the appended claims.

## Claims

1. A crossbow comprising:
a barrel (1) having a first end (11) and a second end (12), a recess (13) defined in the barrel (1) and located between the first and second ends (11, 12), a fixing member (2) having a reception hole (21) defined in one side thereof, the fixing member (2) connected to the recess (13) of the barrel (1), a string (7) connected between the two ends of a limb (3), **characterized in that** crossbow further comprises:
a receiving recess (133) defined in one inner end of the recess (13) and located close to the first end (11) of the barrel (1), a protrusion (24) protruding from the fixing member (2) and is received in the receiving recess (133), a fastener (4) extends through the protrusion (24) and contacts the limb (3) against an inside of the reception hole (21) such that the limb (3) is connected to the reception hole (21) of the fixing member (2), a pin (5) extending through the barrel (1) and the protrusion (24) of the fixing member (2) so as to restrict the fixing member (2) from disengaging from the recess (13) of the barrel (1), the pin (5) has a head (51) and a shank (52), the shank (52) has a groove (521), a first notch (522) and a second notch (523) defined in an outside thereof, the first and second notches (522, 523) located on two ends of the groove (521), a positioning unit (6) positioning the pin (5) to the barrel (1).

2. The crossbow as claimed in claim 1, wherein the recess (13) has a curved face (131) and a first inclined face (132) defined in another inner end of the recess (13) and located close to the second end (12) of the barrel (1), the recess (13) has an engaging face (1331) and a inclined surface (1332) defined in an inner end thereof which is located close to the first end (11) of the barrel (1), the fixing member (2) has a curved face (22) and an inclined guiding face (23), the protrusion (24) has a contact face (241) and a second inclined face (242), the curved face (22) and the inclined guiding face (23) of the fixing member (2) are located corresponding to the curved face (131) and the first inclined face (132), the contact face (241) and the second inclined face (242) of the protrusion (24) are located corresponding to the engaging face (1331) and the inclined surface (1332) of the recess (13).

3. The crossbow as claimed in claim 1, wherein the receiving recess (133) is located between two sidewalls and each sidewall has a first hole (14) defined therethrough, a positioning hole (15) is defined in one of the sidewalls and communicates with the first hole (14) of the sidewall in which the positioning hole (15) is defined, the protrusion (24) has a second hole (243) and a passage (244), the second hole (243) is located corresponding to the first hole (14), the passage (244) communicates with the reception hole (21), the fixing member (2) is engaged with the recess (13) of the barrel (1), the pin (5) extends through the first hole (14) and the second hole (243) to restrict the fixing member (2) from disengaging from the recess (13) of the barrel (1), the positioning unit (6) is connected to the positioning hole (15) to fix the pin (5).

4. The crossbow as claimed in claim 2, wherein the receiving recess (133) is located between two sidewalls and each sidewall has a first hole (14) defined therethrough, a positioning hole (15) is defined in one of the sidewalls and communicates with the first hole (14) of the sidewall in which the positioning hole (15) is defined, the protrusion (24) has a second hole (243) and a passage (244), the second hole (243) is located corresponding to the first hole (14), the passage (244) communicates with the reception hole (21), the fixing member (2) is engaged with the recess (13) of the barrel (1), the pin (5) extends through the first hole (14) and the second hole (243) to restrict the fixing member (2) from disengaging from the recess (13) of the barrel (1), the positioning unit (6) is connected to the positioning hole (15) to fix the pin (5).

5. The crossbow as claimed in claim 1, wherein the positioning unit (6) includes a bolt (61), a resilient member (62) and a ball (63), the ball (63), the resilient member (62) and the bolt (61) are received in the positioning hole (15) in sequence, the bolt (61) is connected to the positioning hole (15) to restrict the resilient member (62) and the ball (63) from disengaging from the positioning hole (15), the resilient member (62) is biased between the ball (63) and the bolt (61) so that the ball (63) is biased to be engaged with one of the first notch (522) or the second notch (523).

6. The crossbow as claimed in claim 5, wherein a first plate (8) and a second plate (9) are located in the reception hole (21) and the limb (3) is clamped between the first and second plates (8, 9), the fastener (4) is connected to the passage (244) and contacts against the second plate (9) in the reception hole (21), the second plate (9) pushes against the limb (3) and the first plate (8) to the inside of the reception hole (21) to fix the limb (3) to the reception hole (21) of the fixing member (2).

7. The crossbow as claimed in claim 6, wherein the reception hole (21) and the passage (244) tilt from the second inclined face (242) toward the curved face (22).

8. The crossbow as claimed in claim 2, wherein the curved face (131) extends downward from an opening of the recess (13) and is connected to the first inclined face (132) which extends to an inner end of the recess (13), the engaging face (1331) extends downward from the opening of the recess (13) and is connected to the inclined surface (1332) which extends to the inner end of the recess (13), the curved face (22) extends downward from a top edge of the fixing member (2) and is connected to the inclined guiding face (23) and extends to an underside of the fixing member (2), the contact face (241) extends downward from the top edge of the fixing member (2) and is connected to the second inclined face (242) and extends to the underside of the fixing member (2).

9. The crossbow as claimed in claim 7, wherein the curved face (131) extends downward from an opening of the recess (13) and is connected to the first inclined face (132) which extends to an inner end of the recess (13), the engaging face (1331) extends downward from the opening of the recess (13) and is connected to the inclined surface (1332) which extends to the inner end of the recess (13), the curved face (22) extends downward from a top edge of the fixing member (2) and is connected to the inclined guiding face (23) and extends to an underside of the fixing member (2), the contact face (241) extends downward from the top edge of the fixing member (2) and is connected to the second inclined face (242) and extends to the underside of the fixing member (2).

## Patentansprüche

1. Armbrust, umfassend:
einen Lauf (1) mit einem ersten Ende (11) und einem zweiten Ende (12), eine Aussparung (13), die im Lauf (1) definiert ist und zwischen dem ersten und dem zweiten Ende (11, 12) angeordnet ist, einen Fixierungsteil (2) mit einem Aufnahmeloch (21), das auf einer Seite davon definiert ist, einen Fixierungsteil (2), der mit der die Aussparung (13) des Laufs (1) verbunden ist, eine Sehne (7), die zwischen den zwei Enden eines Glieds (3) verbunden ist, **dadurch gekennzeichnet, dass** die Armbrust weiter Folgendes umfasst:
eine Aufnahmeaussparung (133), die in einem inneren Ende der Aussparung (13) definiert ist und nahe am ersten Ende (11) des Laufs (1) angeordnet ist, einen Vorsprung (24), der vom Fixierungsteil (2) vorspringt und in der Aufnahmeaussparung (133) aufgenommen ist, eine Befestigungsvorrichtung (4), die sich durch den Vorsprung (24) erstreckt und mit dem Glied (3) gegen eine Innenseite des Aufnahmelochs (21) in Kontakt kommt, so dass das Glied (3) mit dem Aufnahmeloch (21) des Fixierungsteils (2) verbunden ist, einen Stift (5), der sich durch den Lauf (1) und den Vorsprung (24) des Fixierungsteils (2) erstreckt, um zu verhindern, dass sich der Fixierungsteil (2) aus der Aussparung (13) des Laufs (1) löst, der Stift (5) einen Kopf (51) und einen Schaft (52) aufweist, wobei der Schaft (52) eine Nut (521), eine erste Kerbe (522) und eine zweite Kerbe (523) aufweist, die in einer Außenseite davon definiert ist, die erste und die zweite Kerbe (522, 523) auf zwei Enden der Nut (521) angeordnet sind, wobei eine Positionierungseinheit (6) den Stift (5) an den Lauf (1) positioniert.

2. Armbrust nach Anspruch 1, wobei die Aussparung (13) eine erste gekrümmte Seite (131) und eine erste geneigte Seite (132) aufweist, die in einem weiteren inneren Ende der Aussparung (13) definiert ist und nahe am zweiten Ende (12) des Laufs (1) angeordnet ist, die Aussparung (13) eine Eingriffsseite (1331) und eine geneigte Fläche (1332) aufweist, die in einem inneren Ende davon definiert ist, das nahe am ersten Ende (11) des Laufs (1) angeordnet ist, der Fixierungsteil (2) eine gekrümmte Seite (22) und eine geneigte Führungsseite (23) aufweist, der Vorsprung (24) eine Kontaktseite (241) und eine zweite geneigte Seite (242) aufweist, die gekrümmte Seite (22) und die geneigte Führungsseite (23) des Fixierungsteils (2) entsprechend der gekrümmten Seite (131) und der ersten geneigten Seite (132) angeordnet sind, die Kontaktseite (241) und die zweite geneigte Seite (242) des Vorsprungs (24) entsprechend der Eingriffsseite (1331) und der geneigten Fläche (1332) angeordnet sind.

3. Armbrust nach Anspruch 1, wobei die Aufnahmeaussparung (133) zwischen zwei Seitenwänden angeordnet ist und jede Seitenwand ein erstes Loch (14) aufweist, das dadurch definiert ist, ein Positionierungsloch (15) in einer der Seitenwände definiert ist und mit dem ersten Loch (14) der Seitenwand, in der das Positionierungsloch (15) definiert ist, kommuniziert, der Vorsprung (24) ein zweites Loch (243) und einen Durchgang (244) aufweist, das zweite Loch (243) entsprechend dem ersten Loch (14) angeordnet ist, der Durchgang (244) mit dem Aufnahmeloch (21) kommuniziert, der Fixierungsteil (2) mit der Aussparung (13) des Laufs (1) eingegriffen ist, sich der Stift (5) durch das erste Loch (14) und das zweite Loch (243) erstreckt, um zu verhindern, dass sich der Fixierungsteil (2) aus der Aussparung (13) des Laufs (1) löst, die Postionierungseinheit (6) mit dem Positionierungsloch (15) verbunden ist, um den Stift (5) zu fixieren.

4. Armbrust nach Anspruch 2, wobei die Aufnahmeaussparung (133) zwischen zwei Seitenwänden angeordnet ist und jede Seitenwand ein erstes Loch (14) aufweist, das dadurch definiert ist, ein Positionierungsloch (15) in einer der Seitenwände definiert ist und mit dem ersten Loch (14) der Seitenwand, in der das Positionierungsloch (15) definiert ist, kommuniziert, der Vorsprung (24) ein zweites Loch (243) und einen Durchgang (244) aufweist, das zweite Loch (243) entsprechend dem ersten Loch (14) angeordnet ist, der Durchgang (244) mit dem Aufnahmeloch (21) kommuniziert, der Fixierungsteil (2) mit der Aussparung (13) des Laufs (1) eingegriffen ist, sich der Stift (5) durch das erste Loch (14) und das zweite Loch (243) erstreckt, um zu verhindern, dass sich der Fixierungsteil (2) aus der Aussparung (13) des Laufs (1) löst, die Postionierungseinheit (6) mit dem Positionierungloch (15) verbunden ist, um den Stift (5) zu fixieren.

5. Armbrust nach Anspruch 1, wobei die Positionierungseinheit (6) einen Bolzen (61), einen elastischen Teil (62) und einen Ball (63) einschließt, der Ball (63), der elastische Teil (62) und der Bolzen (61) im Positionierungsloch (15) in Reihe aufgenommen sind, der Bolzen (61) mit dem Positionierungloch (15) verbunden ist, um zu verhindern, dass sich der elastische Teil (62) und der Ball (63) aus dem Positionierungsloch (15) lösen, der elastische Teil (62) zwischen dem Ball (63) und der Bolzen (61) vorgespannt ist, so dass der Ball (63) vorgespannt ist, um mit einem der ersten Kerbe (522) und der zweiten Kerbe (523) eingegriffen zu sein.

6. Armbrust nach Anspruch 5, wobei eine erste Platte (8) und eine zweite Platte (9) im Aufnahmeloch (21) angeordnet sind und das Glied (3) zwischen die erste und zweite Platte (8, 9) geklemmt ist, die Befestigungsvorrichtung (4) mit dem Durchgang (244) verbunden ist und gegen die zweite Platte (9) im Aufnahmeloch (21) in Kontakt kommt, die zweite Platte (9) gegen das Glied (3) und die erste Platte (8) auf die Innenseite des Aufnahmelochs (21) schiebt, um das Glied (3) an das Aufnahmeloch (21) des Fixierungsteils (2) zu fixieren.

7. Armbrust nach Anspruch 6, wobei sich das Aufnahmeloch (21) und der Durchgang (244) von der zweiten geneigten Seite (242) hin zur gekrümmten Seite (22) neigen.

8. Armbrust nach Anspruch 2, wobei sich die gekrümmte Seite (131) nach unten von einer Öffnung der Aussparung (13) erstreckt und mit der ersten geneigten Seite (132) verbunden ist, die sich hin zum inneren Ende der Aussparung (13) erstreckt, sich die Eingriffsseite (1331) nach unten von einer Öffnung der Aussparung (13) erstreckt und mit der geneigten Fläche (1332) verbunden ist, die sich hin zum inneren Ende der Aussparung (13) erstreckt, sich die gekrümmte Seite (22) nach unten von einer oberen Kante des Fixierungsteils (2) erstreckt und mit der geneigten Führungsseite (23) verbunden ist und sich an eine Unterseite des Fixierungsteils (2) erstreckt, sich die Kontaktseite (241) nach unten von der oberen Kante des Fixierungsteils (2) erstreckt und mit der zweiten geneigten Seite (242) verbunden ist und sich an die Unterseite des Fixierungsteils (2) erstreckt.

9. Armbrust nach Anspruch 7, wobei sich die gekrümmte Seite (131) nach unten von einer Öffnung der Aussparung (13) erstreckt und mit der ersten geneigten Seite (132) verbunden ist, die sich auf ein inneres Ende der Aussparung (13) erstreckt, sich die Eingriffsseite (1331) nach unten von einer Öffnung der Aussparung (13) erstreckt und mit der geneigten Fläche (1332) verbunden ist, die sich hin zum inneren Ende der Aussparung (13) erstreckt, sich die gekrümmte Seite (22) nach unten von einer oberen Kante des Fixierungsteils (2) erstreckt und mit der geneigten Führungsseite (23) verbunden ist und sich hin zu einer Unterseite des Fixierungsteils (2) erstreckt, sich die Kontaktseite (241) nach unten von der oberen Kante des Fixierungsteils (2) erstreckt und mit der zweiten geneigten Seite (242) verbunden ist und sich hin zur Unterseite des Fixierungsteils (2) erstreckt.

## Revendications

1. Arbalète comprenant :
un fût (1) ayant une première extrémité (11) et une seconde extrémité (12), un évidement (13) défini dans le fût (1) et situé entre les première et seconde extrémités (11, 12), un élément de fixation (2) ayant un trou de réception (21) défini dans un côté de celui-ci, l'élément de fixation (2) étant relié à l'évidement (13) du fût (1), une corde (7) reliée entre les deux extrémités d'un arc (3), **caractérisée par le fait que** l'arbalète comprend en outre :
un évidement de réception (133) défini dans une extrémité interne de l'évidement (13) et situé à proximité de la première extrémité (11) du fût (1), une saillie (24) faisant saillie à partir de l'élément de fixation (2) et reçue dans l'évidement de réception (133), une attache (4) s'étendant à travers la saillie (24) et étant en contact avec l'arc (3) contre un intérieur du trou de réception (21) de telle sorte que l'arc (3) est relié au trou de réception (21) de l'élément de fixation (2), une broche (5) s'étendant à travers le fût (1) et la saillie (24) de l'élément de fixation (2) de façon à empêcher l'élément de fixation (2) de se désengager de l'évidement (13) du fût (1), la broche (5) ayant une tête (51) et une tige (52), la tige (52) ayant une rainure (521), une première encoche (522) et une seconde encoche (523) définies dans un extérieur de celle-ci, les première et seconde encoches (522, 523) étant situées sur deux extrémités de la rainure (521), une unité de positionnement (6) positionnant la broche (5) sur le fût (1).

2. Arbalète selon la revendication 1, dans laquelle l'évidement (13) a une face incurvée (131) et une première face inclinée (132) définies dans une autre extrémité interne de l'évidement (13) et situées à proximité de la seconde extrémité (12) du fût (1), l'évidement (13) a une face d'engagement (1331) et une surface inclinée (1332) définies dans une extrémité interne de celui-ci qui est située à proximité de la première extrémité (11) du fût (1), l'élément de fixation (2) a une face incurvée (22) et une face de guidage inclinée (23), la saillie (24) a une face de contact (241) et une seconde face inclinée (242), la face incurvée (22) et la face de guidage inclinée (23) de l'élément de fixation (2) sont situées en correspondance de la face incurvée (131) et de la première face inclinée (132), la face de contact (241) et la seconde face inclinée (242) de la saillie (24) sont situées en correspondance de la face d'engagement (1331) et de la surface inclinée (1332) de l'évidement (13).

3. Arbalète selon la revendication 1, dans laquelle l'évidement de réception (133) est situé entre deux parois latérales et chaque paroi latérale a un premier trou (14) défini à travers celle-ci, un trou de positionnement (15) est défini dans l'une des parois latérales et communique avec le premier trou (14) de la paroi latérale dans laquelle le trou de positionnement (15) est défini, la saillie (24) a un second trou (243) et un passage (244), le second trou (243) est situé en correspondance du premier trou (14), le passage (244) communique avec le trou de réception (21), l'élément de fixation (2) est engagé avec l'évidement (13) du fût (1), la broche (5) s'étend à travers le premier trou (14) et le second trou (243) pour empêcher l'élément de fixation (2) de se désengager de l'évidement (13) du fût (1), l'unité de positionnement (6) est reliée au trou de positionnement (15) pour fixer la broche (5).

4. Arbalète selon la revendication 2, dans laquelle l'évidement de réception (133) est situé entre deux parois latérales et chaque paroi latérale a un premier trou (14) défini à travers celle-ci, un trou de positionnement (15) est défini dans l'une des parois latérales et communique avec le premier trou (14) de la paroi latérale dans laquelle le trou de positionnement (15) est défini, la saillie (24) a un second trou (243) et un passage (244), le second trou (243) est situé en correspondance du premier trou (14), le passage (244) communique avec le trou de réception (21), l'élément de fixation (2) est engagé avec l'évidement (13) du fût (1), la broche (5) s'étend à travers le premier trou (14) et le second trou (243) pour empêcher l'élément de fixation (2) de se désengager de l'évidement (13) du fût (1), l'unité de positionnement (6) est reliée au trou de positionnement (15) pour fixer la broche (5).

5. Arbalète selon la revendication 1, dans laquelle l'unité de positionnement (6) comprend un boulon (61), un élément élastique (62) et une bille (63), la bille (63), l'élément élastique (62) et le boulon (61) sont reçus dans le trou de positionnement (15) en séquence, le boulon (61) est relié au trou de positionnement (15) pour empêcher l'élément élastique (62) et la bille (63) de se désengager du trou de positionnement (15), l'élément élastique (62) est sollicité entre la bille (63) et le boulon (61) de telle sorte que la bille (63) est sollicitée pour être engagée avec l'une parmi la première encoche (522) et la seconde encoche (523).

6. Arbalète selon la revendication 5, dans laquelle une première plaque (8) et une seconde plaque (9) sont situées dans le trou de réception (21) et l'arc (3) est serré entre les première et seconde plaques (8, 9), l'attache (4) est reliée au passage (244) et est en contact contre la seconde plaque (9) dans le trou de réception (21), la seconde plaque (9) pousse contre l'arc (3) et la première plaque (8) vers l'intérieur du trou de réception (21) pour fixer l'arc (3) au trou de réception (21) de l'élément de fixation (2).

7. Arbalète selon la revendication 6, dans laquelle le trou de réception (21) et le passage (244) s'inclinent à partir de la seconde face inclinée (242) vers la face incurvée (22).

8. Arbalète selon la revendication 2, dans laquelle la face incurvée (131) s'étend vers le bas à partir d'une ouverture de l'évidement (13) et est reliée à la première face inclinée (132) qui s'étend jusqu'à une extrémité interne de l'évidement (13), la face d'engagement (1331) s'étend vers le bas à partir de l'ouverture de l'évidement (13) et est reliée à la surface inclinée (1332) qui s'étend jusqu'à l'extrémité interne de l'évidement (13), la face incurvée (22) s'étend vers le bas à partir d'un bord supérieur de l'élément de fixation (2) et est reliée à la face de guidage inclinée (23) et s'étend jusqu'à un côté inférieur de l'élément de fixation (2), la face de contact (241) s'étend vers le bas à partir du bord supérieur de l'élément de fixation (2) et est reliée à la seconde face inclinée (242) et s'étend jusqu'au côté inférieur de l'élément de fixation (2).

9. Arbalète selon la revendication 7, dans laquelle la face incurvée (131) s'étend vers le bas à partir d'une ouverture de l'évidement (13) et est reliée à la première face inclinée (132) qui s'étend jusqu'à une extrémité interne de l'évidement (13), la face d'engagement (1331) s'étend vers le bas à partir de l'ouverture de l'évidement (13) et est reliée à la surface inclinée (1332) qui s'étend jusqu'à l'extrémité interne de l'évidement (13), la face incurvée (22) s'étend vers le bas à partir d'un bord supérieur de l'élément de fixation (2) et est reliée à la face de guidage inclinée (23) et s'étend jusqu'à un côté inférieur de l'élément de fixation (2), la face de contact (241) s'étend vers le bas à partir du bord supérieur de l'élément de fixation (2) et est reliée à la seconde face inclinée (242) et s'étend jusqu'au côté inférieur de l'élément de fixation (2).
